# EUROPEAN PATENT SPECIFICATION

(11) **EP 1 790 180 B1**
(45) Date of publication and mention of the grant of the patent: **26.03.2008**
(21) Application number: 05777585.0
(22) Date of filing: 02.09.2005
(51) Int. Cl.: H04Q 7/22, H04L 12/56

(54) **CELLPHONE PRESENCE AND LOCATING SYSTEM USING A SIM CARD TRANSMITTER**
ZELLULAR-TELEFON ANWESENHEITS- UND POSITIONSBESTIMMUNGSSYSTEM MITTELS EINES SIM-KARTEN SENDERS
SYSTEME D'ETABLISSEMENT DE PRESENCE ET DE LOCALISATION DE TELEPHONE CELLULAIRE, UTILISANT UN EMETTEUR A CARTE SIM

(30) Priority: 02.09.2004 NO 20043677
(43) Date of publication of application: 30.05.2007
(73) Proprietor: Telenor ASA, 1331 Fornebu (NO)
(72) Inventor: HAUGLI, Hans-Christian, N-0776 Oslo (NO); SVENDSEN, Berit, N-0358 Oslo (NO)
(74) Representative: Briddes, Sam
(86) International application number: PCT/NO2005/000318
(87) International publication number: WO 2006/025750

(56) References cited:
- EP-A- 0 848 564
- EP-A- 1 189 462
- WO-A-97/41654
- WO-A-03/081934
- US-A- 5 021 794

## Description

### FIELD OF THE INVENTION

The present invention relates to wireless communications, and more particularly, to a system for establishing presence and/or location of mobile communication terminals such as cellphones within a specific local zone, either indoor or outdoor without using the cellular resources (channel). The presence or location information is delivered to an information processing server which extracts, formats and sends information relevant to a specific user, based on the presence or location information.

### BACKGROUND OF THE INVENTION

There are more than 1 billion GSM phones with SIM cards in service today. Many cellphones support multimedia information handling. Easy access to relevant information is becoming more important and the envisaged invention is expected simplify access to Multimedia Message Services and thereby increase its usage.

It is possible to set up a cellphone with a built-in GPS to report positions to a server and which then sends relevant information. This is impractical in many situations because of high communications cost, high power consumption and the limited availability of GPS signals indoor and in urban canyons. Cellphones with built in GPS tend to be bulky which limits the market appeal.

Most cellphones can not passively (without transmitting) be located within a small geographic area. The requirements of 911 location determination is usually solved by using cellular transmission and measuring range (two way delay), time of arrival, signal direction/antenna zone or signal strength at the base stations. This a good solution for infrequent localisation, but would be too expensive for non-urgent frequent updates.

Ekahau (http://www.ekahau.com) of Finland offers WLAN tags that use standard WiFi Access Points and signal strength to determine location of a WiFi device. This device is not connected to a SIM card and has no inherent ability to extract SIM information.

Radionor (http://www.radionor.com) of Norway offers WLAN tags that work with their phased array antennas and associated receiver (RadioEye), and use two dimensional angles of arrival to determine location. The tags are not connected to a SIM card and has no inherent ability to extract SIM information.

SanDisk LAN (http://www.sandisk.com/retail sdwifi.html) is offering a Secure Digital (SD) WiFi plug-in card, that could potentially be used in a cellphone with a SD slot.

Future mobile phones with integrated WLAN (Nokia 9500 communicator http://www.nokia.com/nokia/0,,54108,00.html) will probably become more popular, but represent currently a small segment of the market and their W-LAN capabilities are not oriented for U/SIM services.

There are at least four major problems that standard WiFi plug-in and built-in transceivers will have to overcome:
i) They are strongly dependent on the mobile phone model - If the mobile phone does not have an integrated memory card reader, then the solution cannot be used. Currently there are only a few models with this capability and they are usually high-end devices with a small market penetration.
ii) The W-LAN interface is only used for WAP/web browsing and does not provide a mean of communicating to the SIM card unless specifically supported by the mobile phone's operating system.
iii) The standard WLAN protocol is based on carrier sense which requires the receiver to be switched on when active. The use of a receiver increases size, cost and average power consumption.
iv) Available WLAN chips are not designed to operate with a low duty cycle transmitter and do therefore not include the efficient sleep mode required to avoid adversely affecting the cellphone battery life.

Many cellphones have built-in infrared or Bluetooth communications capabilities. Even though the main purpose of these links is to replace local cables, it would be possible to access the SIM information using custom software.
http://www.codeproject.com/ce/irdamobile.asp?df=100&forumid=14123&exp=0&s elect=702415)

Infrared communications has a limited range of perhaps a few meters and requires a direct line of sight between the transmitter and receiver, and this limits the user convenience significantly.

Bluetooth has a somewhat longer range (10 m for class 1 devices), but has a protocol which is inefficient with battery power relative to the envisaged invention. New software would also need to be retrofitted existing phones.

RFID tags have become popular and may be put on a SIM card; such a solution is good when very short range is needed (less than 1 m).

US 6,750,883 describes a context service module, arranged for determining the context of a handheld computer.

US patent 5,835,061 (Method and apparatus for geographic-based communications service) describes a system for portable computers which transmits a beacon signal to a plurality of access points connected to a plurality of information providers which in turn communicates through the access point detecting the beacon signal. This system is applicable to mobile WiFi networks.

The present invention differs from US 5,835,061 in that it is based on cellphone SIM cards which do not contain a receiver. In the present invention, the subsequent communications with the mobile device uses a cellular network which is separate from the SIM transmitter network. Since the cellular coverage is ubiquitous, the present invention does not make use of beacon transmissions to identify nearest access point for routing purposes.

WO-98/58509 describes a SIM card which includes a transceiver, providing local communication between the SIM card and an external station.

US-2002/0086663 describes a presence-based system for providing services to a mobile terminal.

Document WO 2004/002176 A discloses a standalone SIM module comprising a processor and a transmitter, which transmits an ID to a mobile station.

### SUMMARY OF THE INVENTION

An object of the present invention is to provide a system for delivering information, i.e. multimedia information, to a specific mobile communication terminal based on the device location or presence.

Another object of the invention is to provide such a system wherein the information is pushed to the mobile communication terminal automatically without user intervention.

Another object of the invention is to provide such a system which may be used with a regular mobile communication terminal such as a cellphone, provided that the terminal is equipped with a SIM card which is novel and distinctive to the present invention.

A further object of the invention is to provide a SIM card for use with a mobile communication terminal operating in the mobile communication terminal presence and location system.

A further object of the invention is to provide a mobile communication terminal for use with the mobile communication terminal presence and location system.

A further object of the invention is to provide an information processing server for use with the mobile communication terminal presence and location system.

Still another object of the invention is to provide a receiving station for use with the mobile communication terminal presence and location system.

Further obj ects of the present invention are to provide a mobile communication terminal presence and location system, a SIM card, a mobile communication terminal, an information processing server and a receiving station, which overcomes or at least reduces the disadvantages of the prior art.

The above objects and further advantages are achieved by means of a mobile communication terminal presence and locating system, a SIM card, a mobile communication terminal, an information processing server and a receiving station as set forth in the appended independent claims.

Further advantageous embodiments of the invention are submitted in the dependent claims.

Additional features and principles of the present invention will be recognized from the detailed description below.

It is to be understood that both the foregoing general description and the following detailed description are exemplary and explanatory only and are not restrictive of the invention, as claimed. In particular, although the term "cellphone" has been used throughout the specification for simplicity, the skilled person will readily realize that any mobile communication terminal for use in a cellular communication system, may be used, such as a portable computer, a PDA, etc.

### BRIEF DESCRIPTION OF THE DRAWINGS

The invention will now be described in more detail, by way of example only, with reference to the accompanying drawings, in which:
FIG. 1 is a schematic block diagram illustrating a cellphone presence and locating system in accordance with the invention;
FIG. 2 is a schematic block diagram illustrating a transmitter entering an object zone;
FIG. 3 is a schematic timing diagram illustrating frequency dispersion vs. transmission time for two active terminals;
FIG. 4 is a functional block diagram of a SIM card with a transmitter;
FIG. 5 is a functional block diagram of a SIM card;
FIG. 6 is a schematic flow chart illustrating the process performed by the SIM card transmitter software, and

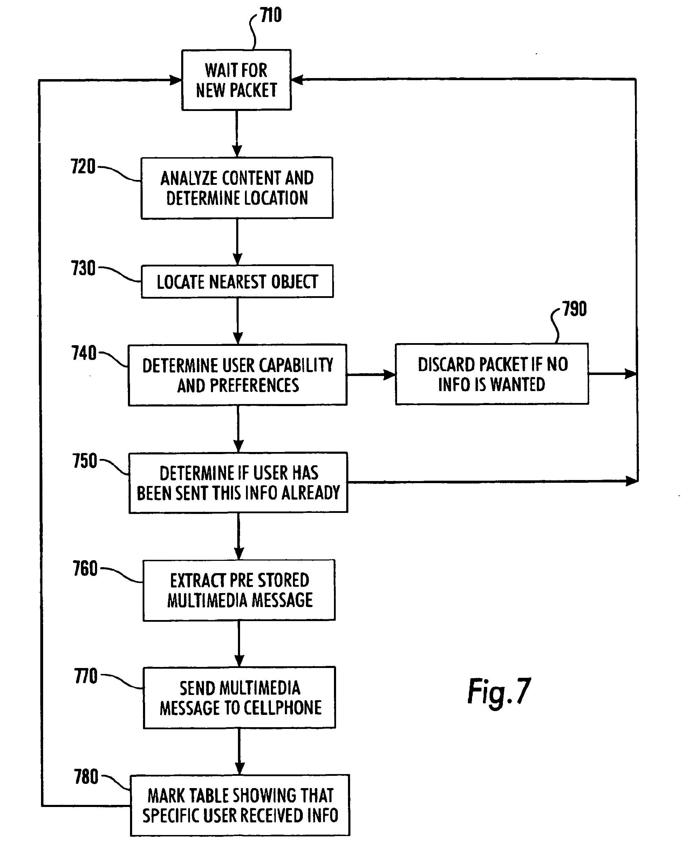

FIG. 7 is a schematic flowchart illustrating the process performed by the information processing system software.

### DESCRIPTION OF THE PREFERRED EMBODIMENTS

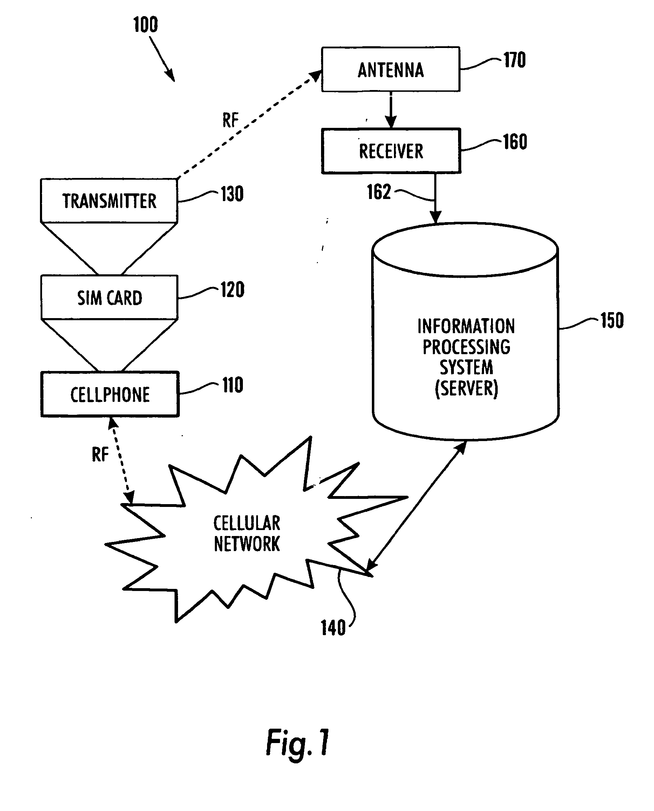

FIG. 1 is a schematic block diagram illustrating a cellphone presence and locating system in accordance with the invention.

The cellular presence and locating system 100 illustrated in fig. 1 comprises at least one cellular communication terminal 110, in particular a cellphone, which includes a SIM card 120 with a built in low duty cycle transmitter 130. The system 100 further comprises a receiving station 160 with antenna 170. The receiving station 160 is operatively connected to an information processing system 150, e.g. through a fixed data network 162. The information processing system 150 is in turn connected to a cellular network 140, such as a GSM network, which is operatively connected to its associated terminals, including the terminal 110.

The transmitter 130 is arranged for broadcasting a user ID at intervals.

The SIM card 120 comprises a SIM processor, arranged for communicating with the transmitter and for controlling the content, timing and duration of the transmitter's transmission content.

The information processing server 150 is arranged for delivering information to the cellphone 110.

This information may include prestored files, e.g. include web pages, pictures, video, audio and textual information about nearby objects as well as local maps showing points of interest. The multimedia information may include hyperlinks to enable a user to access additional information.

The information is preferably delivered by the information processing server 150 via a two way data channel such as the GPRS enabled GSM network 140.

In an embodiment, the information processing server 150 is further arranged for receiving presence or location information from the receiving station 160, and for pushing information to said cellphone110 via the cellular network 140, based on said presence or location information.

Alternatively, the information processing server 150 is arranged for receiving physical signal information from the receiving station 160, deriving presence or location information from the signal information, and pushing information to the cellphone 110 via the cellular network 140, based on the presence or location information.

The information processing system 150 is advantageously arranged for noting which messages have been sent. Further, it is arranged for not repeating the transmission of messages until the content has changed or a certain amount of time has elapsed.

The receiving station 160 is arranged for receiving and decoding a signal transmitted by a transmitter in the SIM card 120. The receiving station 160 is also arranged for forwarding information based on said received and decoded signal to the information processing server 150, in order to deliver information to the cellphone 110 based on presence or location information derived by the received and decoded signal.

The receiving station 160 is preferably arranged for forwarding physical signal information to the information processing server. The physical signal information may include signal strength and/or transmission time of arrival relative to a stable clock.

The receiving station 160 comprises or is operatively connected to at least one antenna 170. In an embodiment, the receiving station 160 comprises direction finding antennas. In this case, the physical signal information includes or is derived from angles of arrival.

In a basic implementation the receiving station 160 consists of a few standard WiFi Access Points connected to a server. Transmitted messages containing the cellphone number and Access Point information are sent to a server. The server extracts from its database a multimedia message containing location specific information (based on the known Access Point radio coverage) and sends this as a multimedia message to the user via the cellphone data network. The server notes that a message has been sent to this user and no new messages are sent until the content or location has changed or a certain amount of time has elapsed.

In an embodiment the receiving station 160 comprises a phased array antenna. The receiving station 160 is arranged for extracting the locations (angles of arrival) of the at least one SIM transmitter 130 and for passing this location information and the transmitted information (e.g. cell phone number and preferences) to the information processing system 150. The information processing system 150 knows the location of certain objects within the coverage zone and extracts from an associated database relevant information and sends this information to the user's cellphone 110 whenever the users enters the object zone.

In a more sophisticated application the receiver extracts the user location more accurately (e.g. using the Radionor RadioEye) and passes this information to the server. The server knows the location of certain objects within the coverage area and sends information using the cellular network about these objects when the user enters the zone for the first time.

The cellphone SIM card 120 comprises a low power, low duty cycle RF transmitter 130, arranged for broadcasting a user ID at intervals, and a SIM processor, arranged for communicating with the transmitter and for controlling the transmitter's transmission content, timing and duration.

Tthe SIM processor in the SIM card 120 is advantageously arranged for causing the transmitter 130 to transmit at intervals using time dispersion.

The SIM processor is advantageously arranged for causing the transmitter 130 to transmit at intervals that are increasing when the cellphone has not moved for a period of time.

The SIM processor is advantageously arranged for causing the transmitter to transmit at intervals that are controlled by the cellphone user.

Alternatively, the SIM processor may be arranged for causing the transmitter to transmit or broadcast on demand.

The transmitter 130 is advantageously arranged for transmitting in a license except band. More particularly, the transmitter 130 is arranged for transmitting with a Bluetooth compatible waveform, a WiFi compatible waveform, a WiMax compatible waveform or a Zigbee compatible waveform.

The availability of highly integrated electronic components makes it now possible to fit a transmitter on the unused parts of a standard size SIM card. Accordingly, the electronic components of the transmitter 130 are preferably physically mounted on the SIM card 120. The main benefits of integrating the transmitter into the SIM card are no additional devices to carry or charge, the automatic availability of secure cellphone ID from the SIM chips and an electrical and mechanical interface that is common to most cellphones.

The transmissions from different cellhones/users are not coordinated and a low duty cycle is essential to minimize power consumption, to reduce interference and to maximize capacity. Both time and frequency dispersion is used to further minimize interference impact and to reduce repeated time collisions.

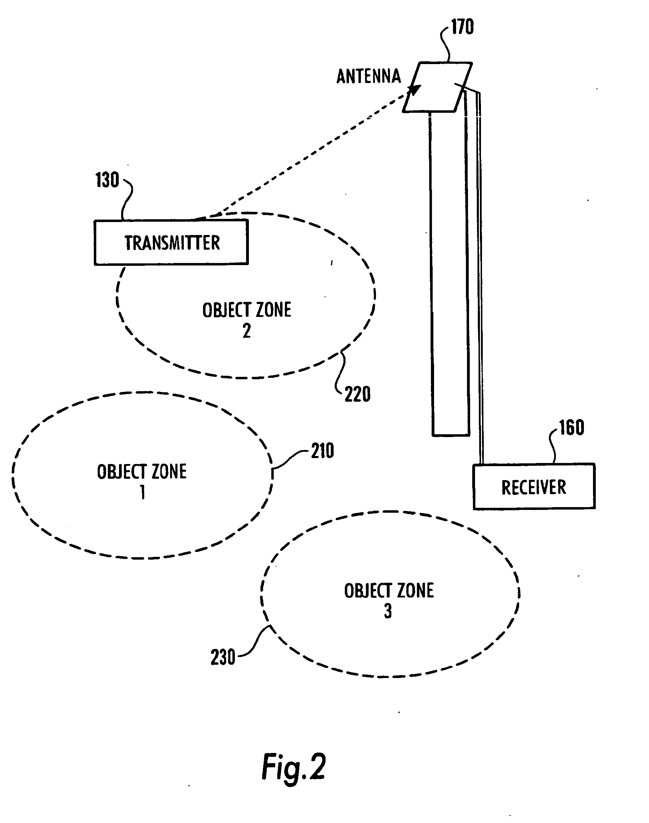

FIG. 2 is a schematic block diagram illustrating a transmitter entering an object zone.

As an example, the system according to the invention may be used for providing information to visitors in a museum with several attractions spread across one floor. A user with a cellular terminal which includes an enabled SIM card transmitter, operating in accordance with the present invention, moves from a first object zone 210 to a second object zone 220. A receiver 160 with an antenna 170 is associated with the second object zone 220. Similarly, another receiver with a corresponding antenna is associated with the first object zone 210. The receiver 160 with antenna 170 will detect the transmitter 130 as the transmitter enters the second object zone 2. This will trigger the information processing system 150, resulting in that information such as pictures, sound and/or text in the language of choice, possibly in the user's language, is transmitted to the cellular terminal 110.
By adding a web cam camera connected to the information processing system 150, the user can be forwarded a video clip or pictures of himself in front of an attraction, this multimedia message can be stored on the cellphone or be redirected to family and friends as a modem electronic postcard.

### Duty cycle

A typical transmitted packet, e.g. a probe message, contains less than 300 bytes including WiFi overheads and can be transmitted in less than 0.25 ms. A duty cycle of 1/4000 is therefore achieved when transmitting on average once per second.

### Power consumption

To minimize battery drain it is important to limit both the transmit duty cycle and transmit power level. The transmitter 130 on the SIM card 120 will therefore radiate around 10 mW. The average DC power consumption will therefore much be less than 1 mW. This additional DC power consumption is insignificant for a typical cellphone with a battery capacity of more than 3000 mWh.

### Capacity

The transmitters 130 are not synchronized and messages will occasionally be lost as a result of timing collisions. (multiple time overlapping signals at the receiver input) The messages are sent at intervals, with random time dispersion to avoid repeated collisions. With a duty cycle of less than 0.025%, several hundred users can operate within the same antenna coverage area with an acceptable message loss rate (<10%). Because messages are continuously repeated, message loss causes only presence detection/ locating delays.

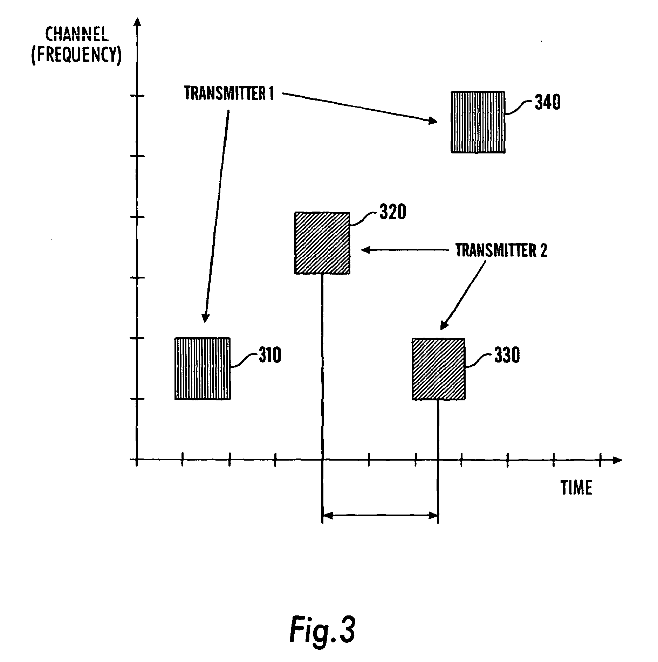

FIG. 3 is a schematic timing diagram illustrating frequency dispersion vs. transmission time for two active terminals.

Fig. 3 illustrates a situation wherein two cellphones 110, each including a SIM card with a transmitter 130, are operating in one and the same transmitter coverage area. The first transmission 310 is transmitted by the first transmitter in the first cellphone SIM card, at a first transmission time and at a first frequency channel. The second transmission 320 is transmitted by the secoond transmitter in the second cellphone SIM card, at a second transmission time and at a second frequency channel. The third transmission 330 is transmitted by the secoond transmitter in the second cellphone SIM card, at a third transmission time and at the first frequency channel. The fourth transmission 340 is transmitted by the first transmitter in the first cellphone SIM card, at a fourth transmission time and at a third frequency channel.

The time 350 between subsequent transmissions is randomly distributed between about zero to about two seconds, and the average time between transmissions is about one second.

### Interference

Devices operating in a license free band may cause and suffer interference from other users. Interference to other users is minimized three ways:
a) The low duty cycle only affects very few packets (1/4000) and these packets will be retransmitted by the ARQ protocols
b) The transmit power is kept low to minimize interference level
c) The transmitters hops in random between several predetermined frequencies for each packet, thereby reducing the probability of frequency with WiFi channels that are normally fixed

Interference degradation into the presence and locating system from WiFi networks is reduced several ways:
a) Packets are repeated
b) Packets are sent at multiple frequencies
c) Directional or zonal receiving antennas can be used
d) Receiving antennas can be placed in positions where the unwanted transmitters are shielded by objects such as buildings, trees or the terrain.

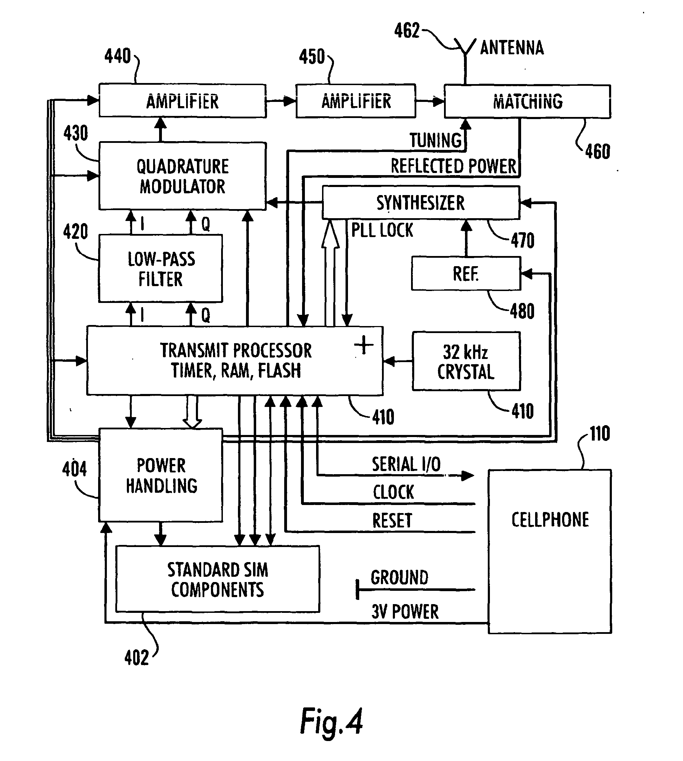

FIG. 4 is a functional block diagram of a SIM card with a transmitter.

In this implementation a WiFi transmitter is used, but a Bluetooth or ZigBee transmitter could be equally well used with trivial modifications to the block diagram.

The operations of the transmitter are controlled by a transmit processor 410 with a built in sleep timer driven by a 32 kHz oscillator 490. The processor 410 further includes associated RAM and Flash memory.

The block diagram further illustrates a low pass filter 420, a quadrature modulator 430, an amplifier 440, a filter 450, an antenna matching circuit 460, an antenna 462, a synthesizer 470, a reference oscillator 480, a power handling device 404, standard SIM components 402 and an interface (Serial I/O, Clock., Reset, Ground, 3V power) connecting the SIM card to the cellphone 110. The operative interconnections between these devices/modules are indicated by lines and arrows in fig. 4.

The base band quadrature signals from the transmit processor 410 are digital and the required filtering and level conversions is done in the Low pass filter 420. This filter uses a combination of inductors, resistors and capacitors to ensure compliance with the WiFi waveform. Notches may be required to remove clocks and their harmonics.

The modulator 430 modulates directly at the transmit frequency using a carrier signal from the synthesizer 470.

The modulated RF signal is then fed to a power amplifier 440 where the output power is increased to approximately 20 mW.

Harmonics and out of band emissions are reduced in the transmit filter 450 which feeds the antenna matching circuit 460.

The matching circuit 460 works as follows: A low pass filtered pulse width modulated signal from the processor tunes the antenna using varicaps. A small coupler with a diode is used convert the reflected power to a DC voltage sensed by the analog input of the processor. The matching voltage is incremented a small amount at each transmission and the change in reflected power measured. The voltage increment sign is changed if the reflected power increases.

The antenna size and shape is severely constrained and it is therefore either a short strip on the PCB or a short wire is used.

The power handling subsystem consists of standard DC filtering components and separate low power, low drop out voltage regulators for each subsystem. Each regulator is controlled on or off by a digital port on the micro.

The synthesizer 470 is programmed by the micro using a serial interface. A separate reference oscillator 480 is used to ensure good stability and spectral purity.

A PLL lock detection signal is sensed by the transmit processor and transmissions will only occur when the synthesizer is locked.

The 32 kHz crystal 490 is a standard low cost watch crystal.

The processor 410 has sufficient processing power to generate the base band waveform. The processor 410 is arranged for performing the following functions:
a) Switches off all subsystems except the sleep timer unless a packet transmission is in progress or the SIM communications port is in an active state,
b) Controls the synthesizer 470 and sets it to a given frequency
c) Generates the in-phase and quadrature waveforms required by the modulator and configures the modulator
d) Powers up the various subsystems in sequence based on warm-up and stabilization times, by the power handling module 404,
e) Manages the SIM communications with both the cellphone and the SIM processor transparently using the ISO 7816 protocols,
f) Controls the timing of the transmissions
g) Measures the power reflected from the antenna 462
h) Adjusts the tuning voltage for the matching network to minimize reflected power based on previous reflected power measurements
i) Communicates with the SIM CPU and extracts information needed for communications with the Information Processing System such as:
   - cellphone number (Mobile Station International ISDN Number),
      - optional greeting (e.g. user name)
      - cellphone capabilities (e.g. software version, graphics capabilities, memory limits, sound capabilities, battery level, supported file formats)
      - user preferences (e.g. access level, off),
      - information richness,
      - type of information (video clips, pictures, text, sound, xml documents),
      - max amount of data,
      - information filters,
      - language.

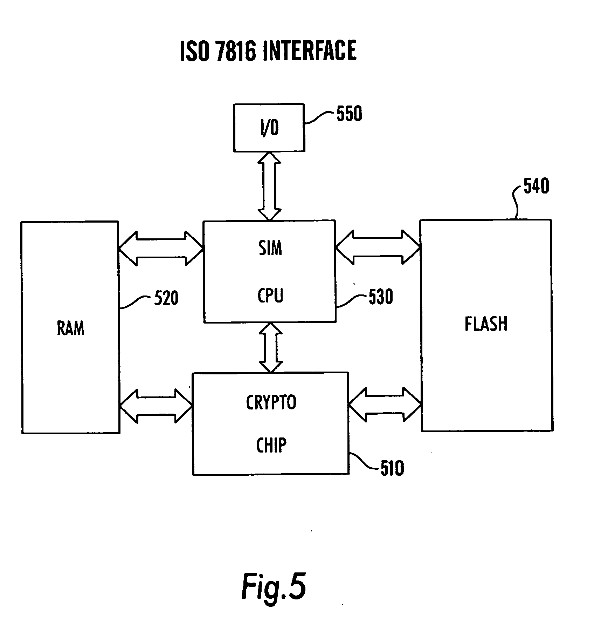

FIG. 5 is a functional block diagram of a SIM card. A SIM CPU 530 is operatively connected to a RAM memory 520 and a Flash memory 540. The CPU 530, the RAM memory 520 and the Flash memory 540 are also operatively connected to a crypto chip 510. The SIM CPU is operatively connected to a I/O device 550, in particular a ISO 7816 interface.

Usually the SIM card comprises an 8-bit processor 530, 2-32 kB flash memory 540 storing executable code and 128 - 512 byte RAM 520. The interface 550 to the phone consists of 8 contacts with the following signals:
- C1, VCC, supply voltage input, 3V.
- C2, RST, input pin, chipcard reset.
- C3, CLK, input pin, chipcard clock.
- C4, reserved for future use.
- C5, GND, SIM card ground.
- C6, VPP, programming power connection, used in first generation cards. Usually not used today.
- C7, I/O, serial data line, input and output.
- C8, reserved for future use.

The communication protocols between the terminal and the SIM card are described in ISO 7816-3 (Transport Protocol) and ISP 7816-4 (Application Protocol). The terminal initializes a smart card by transmitting a signal to the reset (RST) contact of the card. The card will response by transmitting a string of bytes to the terminal. (ATR Answer to Reset)

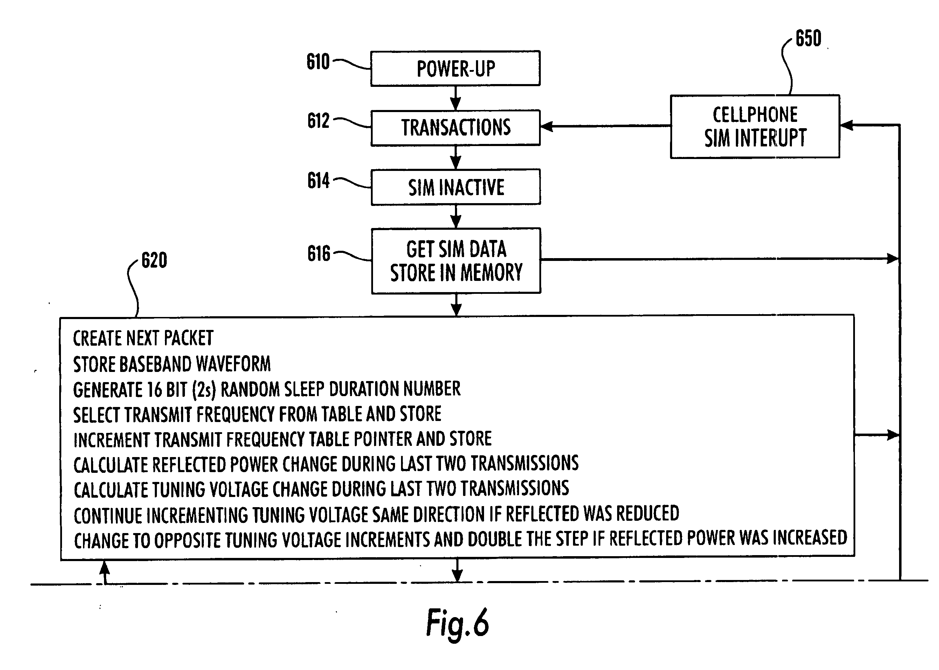

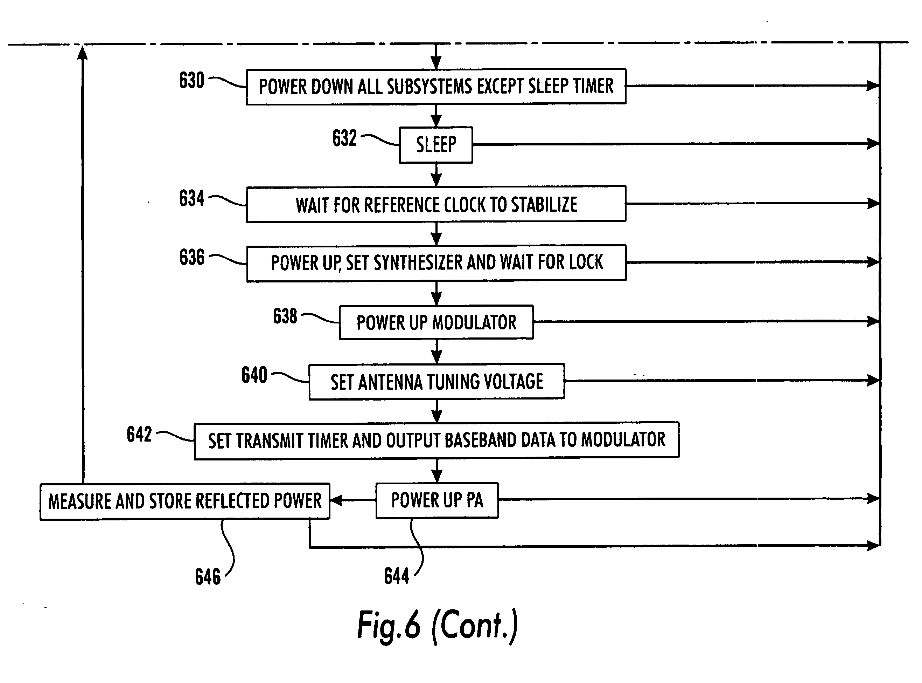

FIG. 6 is a schematic flow chart illustrating the process performed by the SIM card transmitter software.

It should be noted that any activity on the Cellphone SIM interface will interrupt current transmit activities to ensure transparent handling of the transactions between the SIM CPU and the cellphone. The transmit processor will when the SIM transactions are completed, extract the latest information from the SIM processor and use this in subsequent transmissions.

When the cellphone is powered up (step 610) various exchanges or transactions (step 612) occur between the cellphone and the SIM CPU. These transactions are passed transparently through the transmit processor with minimum delay. A stable state is entered when these start up transactions haves ceased for more than a few seconds (step 614).

The transmit processor then extracts the information needed (see (i) above from the SIM CPU. The information is processed and packetized to be compatible with the WiFi waveform (IP v6) and stored in quadrature in memory (step 616)

A 16 bit random number is generated corresponding a transmit time delay between 0 and 2 seconds, with an average of 1 second. The sleep timer is set to this period and all other systems powered off to minimize power consumption. (included in steo 620)

When the sleep period is over the processor performs the following functions:
- Waits for the reference oscillator to stabilize (fixed time) (step 634)
- Powers up the synthesizer (step 636)
- Programs the synthesizer frequency and waits for lock indication (step 636)
- Powers up the modulator (step 638)

Sets the antenna-matching network tuning voltage based on last two transmissions reflected power readings (step 640)
Generates the stored waveform including stabilization bits
Powers up the amplifier for the duration of the packet (step 644)
Measures reflected power (step 646)
Increments the transmit frequency table (pointer) (included in step 620)
Calculates a 16 bit sleep number as described above (included in step 620)
Power off all subsystems and sets the sleep timer
The steps above are then repeated

The process may be interrupted (step 650) during any of the above mentioned substep, returning control to the transactions step 612.

### Receiving station

The receiving station in its simplest form consists of a WiFi Access Point (AP) with an omni directional antenna. Some AP provide signal strength information and this information, when available, is passed on to the server using an IP network. The fact that a valid broadcast packet is received from a terminal proves that this terminal is present within the coverage area. Signal strength information may be used provide better location information. The Ekahau server software can be used to perform this function.

A more advanced solution will use a phased array antenna and a receiving station that can determine the transmitted signal angle of arrival, and this with knowledge of the antenna location, can be converted to a position fix at the receiver station side or at the server side. The Radionor RadioEye offers this functionality in as part of the receiving station.

Receiving stations using time of arrival differences for location determination use highly accurate clock to time stamp packet arrival time.

### Information Processing System

The Information Processing System is uses a server which is connected to the Presence and Location receiver using a packet data network such as Internet. One or more receiving stations can be connected to one server.

In addition the information contained in the packet, the receiving station provides auxiliary data such as signal strength and information that can be used to derive location. Location may be determined in the receiving station, but it is preferable to centralize this function and do it in the server.

In the case of the Radionor RadioEye, the receiving station provides two dimensional location information (angles) and by knowledge of the receiving station antenna position, orientation and height, the direction can the location of a transmitter be accurately determined. The data is then quantized into a grid or radius pattern mapped to information objects stored in a database. Provided the user has not received information about a object recently and have set the proper preferences, the server extracts stored information and sends this as a data message to the cellular terminal via the cellular network. The message can be sent as a multi media service, a SMS or even as an email.

The content depends on the location. For a typical museum this information may include pictures, text and even audio information in the user's language. It could also be a web page with links to more detailed information.

A web camera can generate a video clip of a user in front of an attraction and the user can then send this video clip as an electronic postcard to friends and family.

### Cellular Data System

An example cellular system (network 140) is GSM SMS which supports up to 140 bytes of data as a SMS and can be used or limited text information. The GSM GPRS and EDGE services may be used for MMS and can handle text and compressed pictures.

The new UMTS services increase the bitrates and can support videoclips as part of the MMS services.

Although the term "cellphone" has been used throughout this specification for simplicity, the skilled person will readily realize that any mobile communication terminal for use in a cellular communication system, may be used, such as a portable computer, a PDA, etc.

The invention is applicable to technical fields including the following:
Cellular networks, Global System for Mobile Communications (GSM), Universal Mobile Telecommunications System (UMTS), Subscriber Identity Modules (SIM), WiFi (IEEE 802.11), Blue Tooth (IEEE 802), and Zigbee (IEEE 802.15).

A number of useful applications of the invention will appear to the skilled person from the above detailed description, including a information push system for use in public premises or areas such as a museum or similar tourist attraction. Another application of the invention is guiding people with poor eyesight. In this case automatic audio information can guide a person around obstacles. The invention may also be used for access control.

The above detailed description has explained the invention by way of example. A person skilled in the art will realize that numerous variations and alternatives to the detailed embodiment exist within the scope of the invention, as set forth by the appended claims.

## Claims

1. A mobile communication terminal presence and locating system, comprising:
at least one mobile communication terminal, at least one receiving station, and an information processing server,
said mobile communication terminal comprising a transmitter and a SIM card, including a SIM processor,
said receiving station being arranged for receiving and decoding a signal transmitted by said transmitter and forwarding information based on said received and decoded signal to the information processing server,
**characterized in that**
- said transmitter is a low power, low duty cycle RF transmitter included in the SIM card, the transmitter being arranged for broadcasting a user ID at intervals,
- said SIM processor is arranged for communicating with the transmitter and for controlling the transmitter's transmission content, timing and duration,
- said receiving station is further arranged for forwarding physical signal information to the information processing server, and
- said information processing server is arranged for
- receiving said physical signal information from said receiving station,
- deriving presence or location information from said physical signal information, and
- pushing information to said mobile communication terminal via a cellular network, the information being based on said presence or location information.

2. A system as claimed in claim 1, wherein the physical signal information includes signal strength.

3. A system as claimed in claim 2, wherein the physical signal information includes transmission time of arrival relative to a stable clock.

4. A system as claimed in claim 1, wherein the receiving station comprises direction finding antennas and the physical signal information includes or is derived from angles of arrival.

5. A system as claimed in claim 1, wherein the SIM processor is arranged for causing the transmitter to transmit at intervals using time dispersion.

6. A system as claimed in claim 1, wherein the SIM processor is arranged for causing the transmitter to transmit at intervals that are increasing when the mobile communication terminal has not moved for a period of time.

7. A system as claimed in claim 1, wherein the SIM processor is arranged for causing the transmitter to transmit at intervals that are controlled by the mobile communication terminal user.

8. A system as claimed in claim 1, wherein the transmitter is arranged for transmitting in a license except band.

9. A system as claimed in claim 1, wherein the transmitter is arranged for transmitting with a Bluetooth compatible waveform.

10. A system as claimed in claim 1, wherein the transmitter is arranged for transmitting with a WiFi compatible waveform.

11. A system as claimed in claim 1, wherein the transmitter is arranged for transmitting with a WiMax compatible waveform.

12. A system as claimed in claim 1, wherein the transmitter is arranged for transmitting with a Zigbee compatible waveform.

13. A system as claimed in claim 1, said mobile communication terminal being a cellphone.

## Patentansprüche

1. Anwesenheits- und Lokalisierungssystem für mobile Kommunikationsendgetäte, Folgendes umfassend:
mindestens ein mobiles Kommunikationsendgerät, mindestens eine Einpfangsstation und einen Informationsvetarbeitungsserver,
wobei das mobile Kommunikationscadgerät einen Sender und eine SIM-Karte mit einem STM-Prozessor umfasst,
wobei die Empfangsstation dazu eingerichtet ist, ein vom Sender übertragenes Signal zu empfangen und zu decodieren und Information, die auf dem empfangenen und decodierten Signal basiert, an den Informationsverarbeitungsserver weiterzuleiten,
**dadurch gekennzeichnet, dass**
- der Sender ein leistungsarmer HF-Sender mit geringer relativer Einschaltdauer ist, der in der SIM-Karte enthalten ist, wobei der Sender dazu eingerichtet ist, eine Benutzer-ID in Intervallen rundzusenden,
- wobei der SIM-Prozessor dazu eingerichtet ist, mit dem Sender zu kommunizieren und den Übertragungsinhalt, die Übertraguagszeitvorgabe und die Übertragungsdauer des Senders zu steuern,
- wobei die Empfangsstation darüber hinaus dazu eingerichtet ist, physikalische Signalinformation an den Informationsverarbeitungsserver weiterzuleiten, und
- wobei der Informationsverarbeitungsserver dazu eingerichtet ist,
- die physikalische Signalinformation von der Empfangsstation zu empfangen,
- Anwesenheits- oder Standortinformation aus der physikalischen Signalinformation abzuleiten, und
- Information über ein Zellularnetz an das mobile Kommunikationsendgerät zu schicken, wobei die Information auf der Anwesenheits- oder Standortinformation basiert.

2. System nach Anspruch 1, wobei die physikalische signalinformation die Signalstärke enthält.

3. System nach Anspruch 2, wobei die physikalische Signalinformation die Übertragungsankunftszeit in Bezug auf einen stabilen Takt enthält.

4. System nach Anspruch 1, wobei die Empfangsstation Funkortungsantennen umfasst und die physikalische Signalinformation Ankunftswinkel enthält oder von diesen abgeleitet ist.

5. System nach Anspruch 1, wobei der STM-Prozessor dazu eingerichtet ist, den Sender unter Verwendung von Zeitstreuung in Intervallen senden zu lassen.

6. System nach Anspruch 1, wobei der SIM-Prozessor dazu eingerichtet ist, den Sender in Intervallen senden zu lassen, die zunehmen, wenn sich das mobile Kommuinikationsendgerät eine Zeit lang nicht bewegt hat.

7. System nach Anspruch 1, wobei der SIM-Prozessor dazu eingerichtet ist, den Sender in Intervallen senden zu lassen, die durch den Benutzer des mobilen Kommunikationsendgeräts gesteuert werden.

8. System nach Anspruch 1, wobei der Sender dazu eingerichtet ist, in einem lizenzfreien Band zu senden.

9. System nach Anspruch 1, wobei der Sender dazu eingerichtet ist, mit einer Bluetooth-kompatiblen Wellenform zu senden.

10. System nach Anspruch 1, wobei der Sender dazu eingerichtet ist, mit einer WiFikompatiblen Wellenform zu senden.

11. System nach Anspruch 1, wobei der Sender dazu eingerichtet ist, mit einer WiMax. kompatiblen Wellenform zu senden.

12. System nach Anspruch 1, wobei der Sender dazu eingerichtet ist, mit einer Zigbeekompatiblen Wellenform zu senden.

13. System nach Anspruch 1, wobei das mobile Kommunikationsendgerät ein Handy ist.

## Revendications

1. Système de présence et localisation de terminal de communication mobile, comprenant
au moins un terminal de communication mobile, au moins une station réceptrice et un serveur de traitement d'informations,
ledit terminal de communication mobile comprenant un émetteur et une carte SIM, comprenant un processeur SIM,
ladite station réceptrice étant agencée pour recevoir et décoder un signal transmis par ledit émetteur et retransmettre des informations basées sur ledit signal reçu et décodé au serveur de traitement d'informations,
**caractérisé en ce que**
◆ ledit émetteur est un émetteur RF basse puissance à faible coefficient d'utilisation inclus dans la carte SIM, l'émetteur Étant agencé pour diffuser un identificateur d'utilisateur par intervalles,
◆ ledit processeur SIM est agencé pour communiquer avec l'émetteur et pour commander le contenu, la synchronisation et la durée de transmission de l'émetteur,
◆ ladite station réceptrice est agencée en outre pour retransmettre des informations de signaux physiques au serveur de traitement d'informations, et
◆ ledit serveur de traitement d'informations est agencé pour
◆ recevoir lesdites informations de signaux physiques provenant de ladite station réceptrice,
◆ obtenir des informations de présence et de localisation à partir desdites informations de signaux physiques, et
◆ pousser des informations vers ledit terminal de communication mobile via un réseau cellulaire, les informations étant basées sur lesdites informations de présence et localisation.

2. Système selon la revendication 1, dans lequel les informations de signaux physiques comprennent une intensité de signal.

3. Système selon la revendication 1, dans lequel les informations de signaux physiques comprennent un temps d'arrivée de transmission par rapport à une horloge stable.

4. Système selon la revendication 1, dans lequel la station réceptrice comprend des antennes radiogoniométriques et les informations de signaux physiques comprennent ou sont obtenues à partir d'angles d'arrivée.

5. Système selon la revendication 1, dans lequel le processeur SIM est agencé pour forcer l'émetteur à émettre par intervalles en utilisant la dispersion temporelle.

6. Système selon la revendication 1, dans lequel le processeur SIM est agencé pour forcer l'émetteur à émettre par intervalles qui sont augmentés quand le terminal de communication mobile ne s'est pas déplacé pendant une période de temps.

7. Système selon la revendication 1, dans lequel le processeur SIM est agencé pour forcer l'émetteur à émettre par intervalles qui sont contrôlés par l'utilisateur de terminal de communication mobile.

8. Système selon la revendication 1, dans lequel l'émetteur est agencé pour émettre dans une bande exclusive de licence.

9. Système selon la revendication 1, dans lequel l'émetteur est agencé pour émettre avec une forme d'onde compatible Bluetooth.

10. Système selon la revendication 1, dans lequel l'émetteur est agencé pour émettre avec une forme d'onde compatible WiFi.

11. Système selon la revendication 1, dans lequel l'émetteur est agencé pour émettre avec une forme d'onde compatible WiMax.

12. Système selon la revendication 1, dans lequel l'émetteur est agencé pour émettre avec une forme d'onde compatible Zigbee.

13. Système selon la revendication 1, ledit terminal de communication mobile étant un téléphone cellulaire.
